# EUROPÄISCHE PATENTSCHRIFT

(11) **EP 0 577 145 B1**
(45) Veröffentlichungstag und Bekanntmachung des Hinweises auf die Patenterteilung: **19.03.1997**
(21) Anmeldenummer: 93110978.9
(22) Anmeldetag: 16.01.1990
(51) Int. Cl.: B27K 5/00, B27K 3/50

(54) **Mittel oder Konzentrat zum Konservieren von Holz oder Holzwerkstoffen**
Agent or concentrate for the preservation of wood or wooden materials
Agent ou concentré de préservation du bois ou des matériaux en bois

(30) Priorität: 02.03.1989 DE 3906556
(43) Veröffentlichungstag der Anmeldung: 05.01.1994
(62) Teilanmeldung aus: 90100818.5
(73) Patentinhaber: DESOWAG GmbH, D-40476 Düsseldorf (DE)
(72) Erfinder: Metzner, Wolfgang, Dr., D-4150 Krefeld (DE); Naczinski, Luzian, D-4005 Meerkamp-Lank (DE); Wegen, Hans-Werner, Dr., D-4150 Krefeld (DE)
(74) Vertreter: Sparing - Röhl - Henseler Patentanwälte

(56) Entgegenhaltungen:
- EP-A- 0 135 854
- EP-A- 0 198 165
- EP-A- 0 254 857
- EP-A- 0 269 817

## Beschreibung

Die vorliegende Erfindung betrifft ein Mittel oder Konzentrat zum Konservieren von Holz oder Holzwerkstoffen auf der Basis von oder unter Mitverwendung von 1-Aryl-3-hydroxy-3-alkyl-4-(1,2,4-triazol-1-yl)-butan-derivaten der Formel 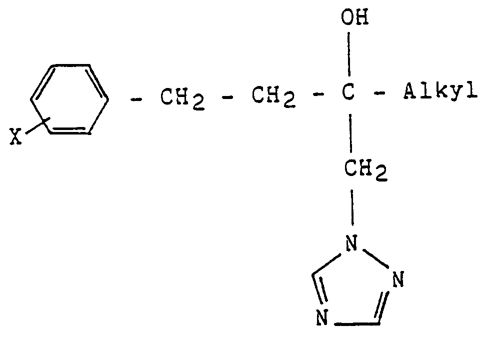 in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe und mindestens eines Lösungsmittels, Verdünnungsmittels und/oder Zusatzmittels.

Die genannten 1-Aryl-3-hydroxy-3-alkyl-4-(1,2,4-triazol-1-yl)-butanderivate sind aus der DE-OS 36 21 494 bekannt und finden als fungizid wirkende Mittel zum Schutz technischer Materialien vor Schädigung oder Zerstörung durch Mikroorganismen Verwendung.

An Holzkonservierungsmittel werden aber Anforderungen gestellt, die über die reine fungzide Wirksamkeit hinausgehen.

Ziel und Aufgabe der vorliegenden Erfindung war es daher, ein Holzkonservierungsmittel zu finden, das gegenüber holzverfärbenden und holzzerstörenden Pilzen sowie gegenüber holzschädigenden Insekten, insbesondere gegenüber holzzerstörenden Bockkäfern (Cerambycidae, Lyctidae, Bostrychidae und Anobiidae) einschließlich Termiten hochwirksam ist und eine gute Langzeitwirkung aufweist, wobei die Wirksamkeit des Fungizides durch das Insektizid nicht beeinträchtigt wird bzw. umgekehrt. Darüber hinaus sollte das Holzkonservierungsmittel ein gutes Eindringvermögen im Holz und in den Holzwerkstoffen aufweisen.

Erfindungsgemäß wurde festgestellt, daß diesen Zielen und Aufgaben ein Mittel oder Konzentrat zum Konservieren von Holz oder Holzwerkstoffen gerecht wird, welches 0,05 - 25 Gew.-% eines Fungizidgemisches ausgewählt aus der Gruppe
a) der 1-Aryl-3-hydroxy-3-alkyl-4-(1,2,4-triazol-1-yl)-butanderivate der Formel I 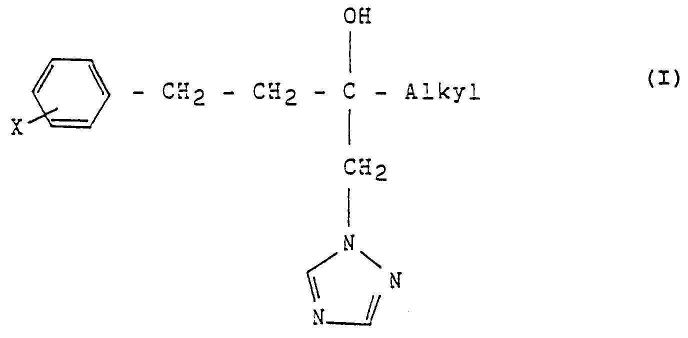 in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe,
und
b) wenigstens einem Fungizid ausgewählt aus der Gruppe N-Dichlorfluormethylthio-N',N'-dimethyl-N-phenylschwefelsäurediamid (Dichlofluanid), N-(Dichlorfluormethylthio)N',N'-dimethyl-N-p-tolylsulfamid (Methyleuparen), 1-{[2-(2,4-Dichlorphenyl)-1,3-dioxolan-2-yl]methyl}-1-H-1,2,4-triazol (Azaconazol), 1-{[2-(2,4-Dichlorphenyl)-4-propyl-1,3-dioxolan-2-yl]methyl}-1H-1,2,4- triazol (Propiconazol), Tributylzinn-naphthenat und Methyl-benzimidazol-2-yl-carbamat (Carbendazim),
   wobei der Anteil der Fungizide der Gruppe b) an dem Fungizidgemisch bis 50 Gew.-%, vorzugsweise 0,5 bis 25 Gew.-% betragen kann,
0,002 - 5 Gew.-% eines Insektizides (Pyrethroids) ausgewählt aus der Gruppe Cyano-(4-fluoro-3-phenoxyphenyl)-methyl-3-(2,2-dichlorethenyl)-2,2-dimethylcyclopropancarboxylat, (±)α-Cyano-3-phenoxy-benzyl-(±)-cis,trans-3-(2,2-dichlorvinyl)-2,2-dimethylcyclopropancarboxylat, (S)-α-Cyano-3-phenoxybenzyl(1R,3R)-3(2,2-dibromvinyl)-2,2-dimethylcyclopropancarboxylat oder 3-Phenoxybenzyl-(±)-cis-trans-3-(2,2-dichlorvinyl)2,2-dimethylcyclopropancarboxylat oder enantiomere Verbindungen derselben
und
den Rest auf 100 Gew.-%, jedoch mehr als 40 Gew.-% eines Gemisches aus Lösungs- und/oder Verdünnungsmittel und/oder organisch-chemisches Bindemittel und/oder Fixierungsmittel, Verarbeitungshilfsmittel, Farbstoff, Pigment, Farbstoff- oder Pigmentgemisch enthält.

Das Lösungs- und/oder Verdünnungsmittel enthält ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel oder besteht daraus.

Bevorzugt enthält das erfindungsgemäße Mittel oder Konzentrat als 1-Aryl-3-hydroxy-3-alkyl-4-(1,2,4-triazol-1-yl)-butanderivat
1-(4-Fluor-)phenyl-3-hydroxy-3-tert.-butyl-4-(1,2,4-triazol-1-yl)-butan,
1-(4-Chlor-)phenyl-3-hydroxy-3-tert.-butyl-4-(1,2,4-triazol-1-yl)-butan oder
1-(4-Brom-)phenyl-3-hydroxy-3-tert.-butyl-4-(1,2,4-triazol-1-yl)-butan.

Als organisch-chemische Lösungsmittel werden vorzugsweise ölige oder ölartige Lösungsmittel mit einer Verdunstungszahl über 35 und einem Flammpunkt oberhalb 30 °C, vorzugsweise oberhalb 45 °C, eingesezt. Als derartige schwerflüchtige, wasserunlösliche, ölige oder ölartige Lösungsmittel werden entsprechende Mineralöle oder deren Aromatenfraktionen oder mineralölhaltige Lösungsmittelgemische, vorzugsweise Testbenzin, Petroleum und/oder Alkylbenzol verwendet.

Vorteilhaft gelangen Mineralöle mit einem Siedebereich von 170 - 220 °C, Testbenzin mit einem Siedebereich von 170 - 220 °C, Spindelöl mit einem Siedebereich von 250 °C - 350 °C, Petroleum bzw. Aromaten vom Siedebereich 160 - 280 °C, Terpentinöl und dgl. zum Einsatz.

In einer Ausführungsform wurden flüssige aliphatische Kohlenwasserstoffe mit einem Siedebereich von 180 - 210 °C oder hochsiedende Gemische von aromatischen und aliphatischen Kohlenwasserstoffen mit einem Siedebereich von 180 bis ca. 220 °C und/oder Spindelöl und/oder Monochlornaphthalin, vorzugsweise α-Monochlornaphthalin, verwendet.

Die organischen schwerflüchtigen öligen oder ölartigen Lösungsmittel mit einer Verdunstungszahl über 35 und einem Flammpunkt oberhalb 30 °C, vorzugsweise oberhalb 45 °C, können teilweise durch leicht oder mittelflüchtige organisch-chemische Lösungsmittel ersetzt werden, mit der Maßgabe, daß das Lösungsmittelgemisch ebenfalls eine Verdunstungszahl über 35 und einen Flammpunkt oberhalb 30 °C, vorzugsweise oberhalb 45 °C, aufweist und daß das Insektizid-Fungizid-Gemisch in diesem Lösungsmittelgemisch löslich oder emulgierbar ist.

Nach einer bevorzugten Ausführungsform wird ein Teil des organisch-chemischen Lösungsmittels oder Lösungsmittelgemisches durch ein aliphatisches polares organisch-chemisches Lösungsmittel oder Lösungsmittelgemisch ersetzt. Vorzugsweise gelangen Hydroxyl- und/oder Ester- und/oder Ethergruppen enthaltende aliphatische organisch-chemische Lösungsmittel wie beispielsweise Glycoläther, Ester oder dgl. zur Anwendung.

Als organisch-chemische Bindemittel werden im Rahmen der vorliegenden Erfindung die an sich bekannten wasserverdünnbaren und/oder in den eingesetzten organisch-chemischen Lösungsmitteln löslichen oder dispergier- bzw. emulgierbaren Kunstharze und/oder bindende trocknende Öle, insbesondere Bindemittel bestehend aus oder enthaltend ein Acrylatharz, ein Vinylharz, z. B. Polyvinylacetat, Polyesterharz, Polykondensations- oder Polyadditionsharz, Polyurethanharz, Alkydharz bzw. modifiziertes Alkydharz, Phenolharz, Kohlenwasserstoffharz wie Inden-Cumaronharz, Siliconharz, trocknende pflanzliche und/oder trocknende Öle und/oder physikalisch trocknende Bindemittel auf der Basis eines Natur- und/oder Kunstharzes verwendet.

Das als Bindemittel verwendete Kunstharz kann in Form einer Emulsion, Dispersion oder Lösung, eingesetzt werden. Als Bindemittel können auch Bitumen oder bituminöse Substanzen bis zu 10 Gew.-%, verwendet werden. Zusätzlich können an sich bekannte Farbstoffe, Pigmente, wasserabweisende Mittel, Geruchskorrigentien und Inhibitoren bzw. Korrosionsschutzmittel und dgl. eingesetzt werden.

Bevorzugt ist gemäß der Erfindung als organisch-chemisches Bindemittel mindestens ein Alkydharz bzw. modifiziertes Alkydharz und/oder ein trocknendes pflanzliches Öl im Mittel oder im Konzentrat enthalten. Bevorzugt werden gemäß der Erfindung Alkydharze mit einem Ölgehalt von mehr als 45 Gew.-%, vorzugsweise 50 bis 68 Gew.-%, verwendet.

Das organisch-chemische Bindemittel oder Bindemittelgemisch kann ganz, vorzugsweise teilweise durch mindestens ein Fixierungsmittel oder mindestens einen Weichmacher ersetzt werden.

Dabei ist das organisch-chemische Bindemittel oder Bindemittelgemisch von 0 bis zu 75 Gew.-%, vorzugsweise von 0,01 bis zu 35 Gew.-% (bezogen auf 100 Gew.-% eingesetztes Bindemittel, berechnet als Feststoff) durch die gleichen Gewichtsmengen mindestens eines Fixierungsmittels oder mindestens eines Weichmachers ersetzt.

Als Fixierungsmittel oder Weichmacher werden vor allem solche Verbindungen eingesetzt, die neben einer gewissen Bindung oder Haftung an den Wirkstoff zusätzlich eine Verflüchtigung der Wirkstoffe und/oder eine Kristallisation bzw. Ausfällung verhindern sollen, vorzugsweise
a) Weichmacher, z. B. Alkyl-, Aryl- oder Aralkylphthalate, vorzugsweise Dibutyl-, Dioctyl- und Benzylbutylphthalate, Alkylphosphate bzw. Phosphorsäureester, vorzugsweise Tributylphosphat, Adipate, vorzugsweise Di-(2-äthylhexyl)-adipat, Stearate und Oleate, z. B. Alkylstearate oder Alkyloleate, vorzugsweise Butyloleat, Butylstearat oder Amylstearat, Bis-(dimethylbenzyl)-äther, p-Toluolsulfonsäureäthylester, Glycerinester, Glycerinäther oder höhermolekulare Glykoläther und/oder
b) Fixierungsmittel auf der Basis von Ketonen und/oder Polyvinylalkyläthern, z. B. Ketone mit Alkyl-,Aryl- oder Aralkylgruppen, vorzugsweise Benzophenon, Äthylbenzophenon; Polyvinyläther, vorzugsweise Polyvinylmethyläther.

Nach einer bevorzugten Ausführungsform enthält das Mittel (anwendungsfertige Mittel) 0,2 bis 3 Gew.-%, vorzugsweise 0,5 bis 2 Gew.-% des 1-Aryl-3-hydroxy-3-alkyl-4-(1,2,4-triazol-1-yl)-butanderivates, 0,005 bis 1 Gew.-%, vorzugsweise 0,01 bis 0,5 Gew.-% des Pyrethroids und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel und ggf. 0 bis 5 Gew.-%, vorzugsweise 0,1 bis 3 Gew.-% Fixierungsmittel und/oder andere Zusatzmittel als Restbestandteil.

Nach einer anderen bevorzugten Ausführungsform enthält das Mittel (anwendungsfertige Mittel) 0,2 bis 3 Gew.-%, vorzugsweise 0,5 bis 2 Gew.-% des 1-Aryl-3-hydroxy-3-alkyl-4-(1,2,4-triazol-1-yl)-butanderivates, 0,005 bis 1 Gew.-%, vorzugsweise 0,01 bis 0,5 Gew.-% des Pyrethroids, 2 bis 30 Gew.-%, vorzugsweise 5 bis 22 Gew.-% berechnet als Feststoff, eines Kunstharzbindemittels, vorzugsweise ein Alkydharz und/oder ein trocknendes pflanzliches Öl
sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und einen Emulgator und/oder Netzmittel
sowie ggf. Sikkative, Farbstoffe, Farbpigmente und/oder UV-Stabilisatoren als Restbestandteil.

Das erfindungsgemäße Konzentrat zum Konservieren von Holz und Holzwerkstoffen enthält nach einer vorzugsweisen Ausführungsform 0,2 bis 25 Gew.-%, vorzugsweise 3 bis 8 Gew.-%, des Fungizidgemischs, 0,05 bis 5 Gew.-%, vorzugsweise 0,5 bis 1 Gew.-% des Pyrethroids und 5 bis 40 Gew.-%, vorzugsweise 10 bis 30 Gew.-%, (berechnet als Feststoff) mindestens eines organischchemischen Bindemittels und/oder Fixierungsmittels oder Weichmachers
sowie zusätzlich ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil.

Das Mittel oder Konzentrat enthält nach einer Ausführungsform als Emulgator oder Emulgatorgemisch mindestens ein eine Seitengruppe enthaltendes äthoxyliertes Phenol, vorzugsweise ein äthoxyliertes Nonylphenol und/oder eine äthoxylierte Fettsäure.

Das Konzentrat und das daraus hergestellte Mittel zum Konservieren von Holz und Holzwerkstoffen enthält nach einer anderen Ausführungsform ein Gemisch von Emulgatoren mit unterschiedlicher Kettenlänge, von denen mindestens ein Emulgator eine äthoxylierte Seitenkette von weniger als 10 Äthoxygruppen und von denen mindestens ein anderer Emulgator eine äthoxylierte Seitenkette von mehr als 10 Äthoxygruppen besitzt.

Vorteilhaft enthält das Konzentrat und das Mittel als wasserverdünnbares Kunstharz ein Alkydharz, das eine mittlere Öllänge besitzt. Durch die Verwendung dieses Kunstharzes wird trotz des geringen Anteiles des organisch-chemischen Lösungsmittels, z. B. auf Erdölbasis, erreicht, daß einerseits eine bessere Fixierung der Wirkstoffe erzielt und andererseits je nach Kunstharzanteil eine Filmbildung ermöglicht wird.

Nach einer vorzugsweisen Ausführungsform ist das erfindungsgemäße Mittel oder Konzentrat frei von aromatischen Oxyalkoholen.

Das erfindungsgemäße Mittel oder Konzentrat zum Konservieren von Holz und Holzwerkstoffen gelangt gegenüber folgende holzzerstörende Insekten und holzzerstörende Pilze zum Einsatz:
A. Holzzerstörende Insekten wie
   A.1. Käfer:
      Hylotrupes bajulus, Chlorophorus pilosus, Anobium punctatum, Xestobium rufovillosum, Ptilinus pecticornis, Dendrobium pertinex, Ernobius mollis, Priobium carpini,
      Lyctus brunneus, Lyctus africanus, Lyctus planicollis, Lyctus linearis, Lyctus pubescens, Trogoxylon aequale, Minthea rugicollis,
      Xyleborus spec., Tryptodendron spec.,
      Apate monachus, Bostrychus capucins,
      Heterobostrychus brunneus, Sinoxylon spec, Dinoderus minutus.
   A.2. Hautflügler
      Sirex juvencus, Urocerus gigas, Urocerus gigas taignus, Urocerus augur.
   A.3. Termiten
      Kalotermes flavicollis, Cryptotermes brevis,
      Heterotermes indicola, Reticulitermes flavipes, Reticulitermes santonensis, Reticulitermes lucifugus,
      Mastotermes darwiniensis, Zootermopsis nevadensis,
      Coptotermes formosanus.
B. Holzzerstörende Pilze wie
   B.1. Basidiomyceten
      Coniophora puteana, Coriolus versicolor, Poria placenta, Poria monticola, Poria vaporaria, Poria vaillantii, Gloeophyllum sepiarium, Gloeophyllum adoratum, Gloeophyllum abietinum, Gloeophyllum trabeum, Gloeophyllum protactum, Lentinus lepideus, Lentinus edodes, Lentinus cyathiformes, Lentinus squarrolosus, Paxillus panuoides, Tyromyces palustris, Pleurotus ostreatus, Donkioporia expansa, Serpula lacrymans, Serpula himantoides, Glenospora graphii.
   B.2. Deuteromyceten
      Cladosporium herbarum.
   B.3. Ascomyceten
      Chaetomium globosum, Chaetomium alba-arenulum, Petriella setifera, Trichurus spiralis, Humicola grisea.
C. Holzverfärbende Pilze wie
   C.1. Deuteromyceten
      Aureobasidium pullulans, Sclerophoma pithyophila, Scopularia phycomyces, Aspergillus niger, Penicillium variabile, Trichoderma viride, Trichoderma lignorum, Dactyleum fusarioides.
   C.2. Ascomyceten
      Caratocystis minor.
   C.3. Zygomyceten
      Mucor spinosus.

### Beispiele

1. Lasurartiges Holzkopservierungsmittel (farblos)

| | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenyl)-methyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100%ig) | 15,0 Gew.-% |
| Sikkative, Netzmittel, Antiabsetzmittel | 1,0 Gew.-% |
| Butyldiglykol | 3,0 Gew.-% |
| Lösungsmittel (Gemisch aus aromatischen und aliphatischen Kohlenwasserstoffen) | 78,94 Gew.-% |

2. Lasurartiges Holzkonservierungsmittel (farbig)

| | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenyl)-methyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz (100%ig) | 23,0 Gew.-% |
| Pigment | 3,0 Gew.-% |
| Sikkative, Netzmittel, Antiabsetzmittel | 1,0 Gew.-% |
| Butyldiglykol | 3,0 Gew.-% |
| Lösungsmittel (Gemisch aus aromatischen und aliphatischen Kohlenwasserstoffen) | 67,94 Gew.-% |

3. Holzkonservierungsmittel mit grundierender Wirkung

| | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenyl)-methyl-3-(2,2-dichloro-ethenyl)-2,2-dimethylcyclopropancarboxylat (Cyfluthrin) | 0,01 Gew.-% |
| N-Dichlorfluormethylthio-N',N'-dimethyl-N-phenylschwefelsäurediamid (Dichlofluanid) | 0,55 Gew.-% |
| Alkydharz 100%ig | 7,0 Gew.-% |
| Butyldiglykol | 3,0 Gew.-% |
| Sikkative | 0,2 Gew.-% |
| Lösungsmittel (Gemisch aus aromatischen und aliphatischen Kohlenwasserstoffen) | 87,74 Gew.-% |

4. Konzentrat zum Konservieren von Holz und Holzwerkstoffen, wasserverdünnbar

| | |
|---|---|
| 1-(4-Chlor-)phenyl-3-hydroxy-3-tert.-butyl-4-(1,2,4-triazol-1-yl)-butan | 8,0 Gew.-% |
| Cyano-(-4-fluoro-3-phenoxyphenyl)-methyl-3-(2,2-dichloro-ethenyl)-2,2-dimethylcyclopropancarboxylat (Cyfluthrin) | 0,5 Gew.-% |
| Methyl-benzimidazol-2-yl-carbamat (Carbendazim) | 1,6 Gew.-% |
| Alkydharz (100%ig) | 30,0 Gew.-% |
| Emulgator | 10,0 Gew.-% |
| Wasser | 49,9 Gew.-% |

5. Lasurartiges Holzkonservierungsmittel, wasserverdünnbar

| | |
|---|---|
| 1-(4-Chlor-)phenyl-3-hydroxy-3-tert.-butyl-4-(1,2,4-triazol-1-yl)-butan | 1,5 Gew.-% |
| Cyano-(-4-fluoro-3-phenoxyphenyl)-methyl-3-(2,2-dichloro-ethenyl)-2,2-dimethylcyclopropancarboxylat (Cyfluthrin) | 0,01 Gew.-% |
| Methyl-benzimidazol-2-yl-carbamat (Carbendazim) | 0,3 Gew.-% |
| Alkydharz (100%ig) | 20,0 Gew.-% |
| Emulgator | 3,0 Gew.-% |
| Pigmente | 3,0 Gew.-% |
| Sikkative, Netzmittel, Antiabsetzmittel | 1,0 Gew.-% |
| Butyldiglykol | 3,0 Gew.-% |
| Wasser | 68,19 Gew.-% |

## Patentansprüche

1. Mittel oder Konzentrat zum Konservieren von Holz oder Holzwerkstoffen enthaltend
0,05 - 25 Gew.-% eines Fungizidgemisches ausgewählt aus der Gruppe
a) der 1-Aryl-3-hydroxy-3-alkyl-4-(1,2,4-triazol-1-yl)-butanderivate der Formel I 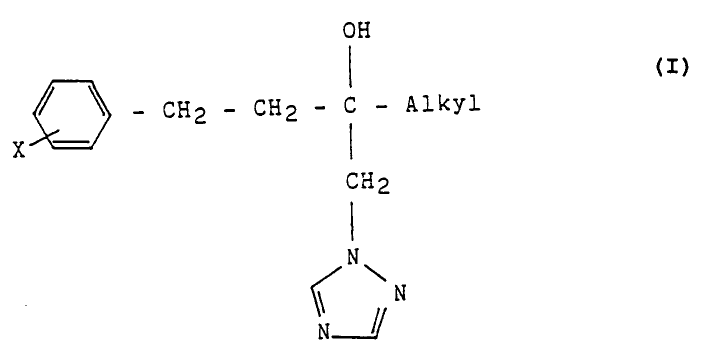 in welcher X für Halogen, Alkylthio mit 1 bis 4 Kohlenstoffatomen oder Halogenalkoxy mit 1 oder 2 Kohlenstoffatomen und 1 bis 5 Halogenatomen steht und Alkyl für eine Alkylgruppe mit 1 bis 4 Kohlenstoffatomen steht und/oder deren Säureadditions-Salze und Metallsalz-Komplexe,
und
b) wenigstens einem Fungizid ausgewählt aus der Gruppe N-Dichlorfluormethylthio-N',N'-dimethyl-N-phenylschwefelsäurediamid, N-(Dichlorfluormethylthio)N',N'-dimethyl-N-p-tolylsulfamid, 1-{[2-(2,4-Dichlorphenyl)-1,3-dioxolan-2-yl]methyl}-1-H-1,2,4-triazol, 1-{[2-(2,4-Dichlorphenyl)-4-propyl-1,3-dioxolan-2-yl]methyl}-1H-1,2,4-triazol, Tributylzinn-naphthenat und Methyl-benzimidazol-2-yl-carbamat,
wobei der Anteil der Fungizide der Gruppe b) an dem Fungizidgemisch bis 50 Gew.-%, vorzugsweise 0,5 bis 25 Gew.-% betragen kann,
0,002 - 5 Gew.-% eines Insektizides (Pyrethroids) ausgewählt aus der Gruppe Cyano-(4-fluoro-3-phenoxyphenyl)-methyl-3-(2,2-dichlorethenyl)-2,2-dimethylcyclopropancarboxylat, (±)α-Cyano-3-phenoxy-benzyl-(±)-cis,trans-3-(2,2-dichlorvinyl)-2,2-dimethylcyclopropancarboxylat, (S)-α-Cyano-3-phenoxybenzyl(1R,3R)-3(2,2-dibromvinyl)-2,2-dimethylcyclopropancarboxylat oder 3-Phenoxybenzyl-(±)-cis-trans-3-(2,2-dichlorvinyl)2,2-dimethylcyclopropancarboxylat oder enantiomere Verbindungen derselben
und
den Rest auf 100 Gew.-%, jedoch mehr als 40 Gew.-% eines Gemisches aus Lösungs- und/oder Verdünnungsmittel und/oder organisch-chemisches Bindemittel und/oder Fixierungsmittel, Verarbeitungshilfsmittel, Farbstoff, Pigment, Farbstoff- oder Pigmentgemisch.

2. Mittel oder Konzentrat nach Anspruch 1, dadurch gekennzeichnet, daß das Lösungs- und/oder Verdünnungsmittel ein organisch-chemisches Lösungsmittel oder Lösungsmittelgemisch und/oder ein öliges oder ölartiges schwerflüchtiges organischchemisches Lösungsmittel oder Lösungsmittelgemisch und/oder ein polares organisch-chemisches Lösungsmittel oder Lösungsmittelgemisch und/oder Wasser und mindestens einen Emulgator und/oder Netzmittel enthält oder daraus besteht.

3. Mittel oder Konzentrat nach Anspruch 1 oder 2, dadurch gekennzeichnet, daß es als 1-Aryl-3-hydroxy-3-alkyl-4-(1,2,4-triazol-1-yl)-butanderivat der Formel I 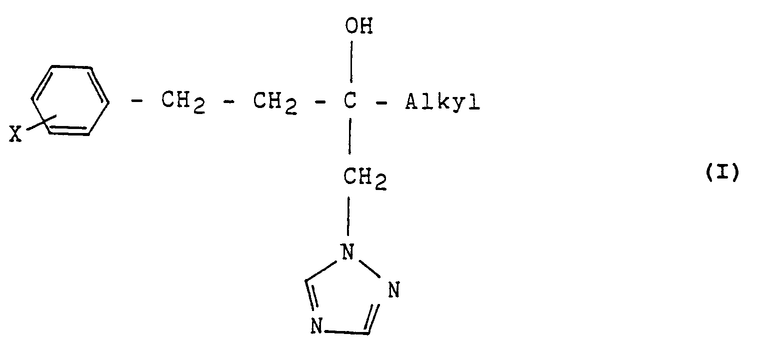 1-(4-Fluor-)phenyl-3-hydroxy-3-tert.-butyl-4-(1,2,4-triazol-1-yl)-butan,
1-(4-Chlor-)phenyl-3-hydroxy-3-tert.-butyl-4-(1,2,4-triazol-1-yl)-butan oder
1-(4-Brom-)phenyl-3-hydroxy-3-tert.-butyl-4-(1,2,4-triazol-1-yl)-butan
enthält.

4. Anwendungsfertiges Mittel nach einem der Ansprüche 1 bis 3, dadurch gekennzeichnet, daß es
0,2 bis 3 Gew.-%, vorzugsweise
0,5 bis 2 Gew.-%
des 1-Aryl-3-hydroxy-3-alkyl-4-(1,2,4-triazol-1-yl) butanderivates,
0,005 bis 1 Gew.-%, vorzugsweise
0,01 bis 0,5 Gew.-%
des Pyrethroids
und mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel und ggf.
0 bis 5 Gew.-%, vorzugsweise
0,1 bis 3 Gew.-%
Fixierungsmittel und/oder andere Zusatzmittel als Restbestandteil enthält.

5. Anwendungsfertiges Mittel nach einem der Ansprüche 1 bis 3, dadurch gekennzeichnet, daß es
0,2 bis 3 Gew.-%, vorzugsweise
0,5 bis 2 Gew.-%
des 1-Aryl-3-hydroxy-3-alkyl-4-(1,2,4-triazol-1-yl)-butanderivates,
0,005 bis 1 Gew.-%, vorzugsweise
0,01 bis 0,5 Gew.-%
des Pyrethroids,
2 bis 30 Gew.-%, vorzugsweise
5 bis 22 Gew.-% berechnet als Feststoff,
eines Kunstharzbindemittels, vorzugsweise ein Alkydharz und/oder ein trocknendes pflanzliches Öl
sowie mindestens ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder Wasser und Emulgator und/oder Netzmittel
sowie ggf. Sikkative, Farbstoffe, Farbpigmente, Antiabsetzmittel und/oder UV-Stabilisatoren als Restbestandteil enthält.

6. Konzentrat nach einem der Ansprüche 1 bis 3, dadurch gekennzeichnet, daß es
0,2 bis 25 Gew.-%, vorzugsweise
3 bis 8 Gew.-%,
des Fungizidgemischs
0,05 bis 5 Gew.-%, vorzugsweise
0,5 bis 1 Gew.-%
des Pyrethroids und
5 bis 40 Gew.-%, vorzugsweise
10 bis 30 Gew.-%,
(berechnet als Feststoff) mindestens eines organisch-chemischen Bindemittels und/oder Fixierungsmittels oder Weichmachers sowie
zusätzlich ein organisch-chemisches Lösungsmittel oder Lösungsmittelgemisch und/oder ein öliges oder ölartiges schwerflüchtiges organisch-chemisches Lösungsmittel oder Lösungsmittelgemisch und/oder ein polares organisch-chemisches Lösungsmittel oder Lösungsmittelgemisch und/oder ein Penetrationshilfsmittel und/oder Wasser und einen Emulgator und/oder Netzmittel als Restbestandteil enthält.

7. Mittel oder Konzentrat nach einem der Ansprüche 1 bis 6, dadurch gekennzeichnet, daß es frei von aromatischen Oxyalkoholen ist.

8. Mittel oder Konzentrat nach einem der Ansprüche 1 bis 7, dadurch gekennzeichnet, daß ein Teil des organisch-chemischen Lösungsmittels oder Lösungsmittelgemisches durch ein aliphatisches polares organisch-chemisches Lösungsmittel oder Lösungsmittelgemisch, vorzugsweise ein Hydroxy- und/oder Ester- und/oder Äthergruppen enthaltendes aliphatisches organisch-chemisches Lösungsmittel oder Lösungsmittelgemisch ersetzt ist.

## Claims

1. Agent or concentrate for preserving wood or wood materials containing
0.05 - 25% by weight of a fungicidal mixture chosen from the group
a) of 1-aryl-3-hydroxy-3-alkyl-4-(1,2,4-triazol-1-yl)-butane derivatives of formula I 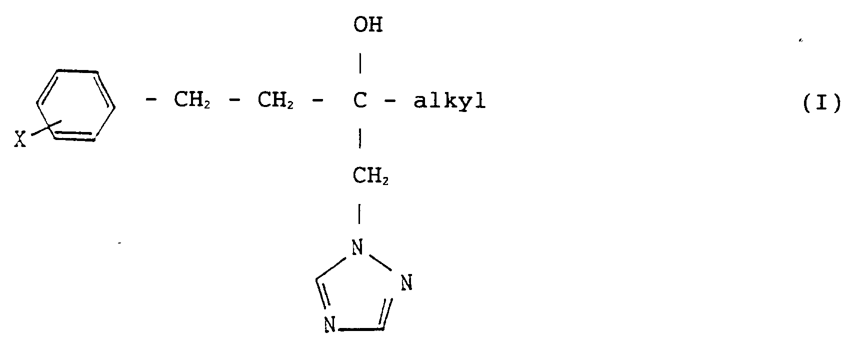 in which X stands for halogen, alkylthio with 1 to 4 carbon atoms or halogenalkoxy with 1 or 2 carbon atoms and 1 to 5 halogen atoms and alkyl stands for an alkyl group with 1 to 4 carbon atoms and/or its acid addition salts and metal salt complexes,
and
b) at least one fungicide chosen from the group N-dichlorofluoromethylthio-N',N'-dimethyl-N-phenylsulphuric acid diamide, N-(dichlorofluoromethylthio)N',N'-dimethyl-N-p-tolylsulphamide, 1-{[2-(2,4-dichlorophenyl)-1,3-dioxolan-2-yl]methyl}-1-H-1,2,4-triazol, 1-{[2-(2,4-dichlorophenyl)-4-propyl-1,3-dioxolan-2-yl]methyl}-1H-1,2,4-triazol, tributyl tinnaphthenate and methyl-benzimidazol-2-yl-carbamate,
the proportion of fungicide of group b) in the fungicidal mixture being able to amount to up to 50% by weight, preferably 0.5 to 25% by weight,
0.002 - 5% by weight of an insecticide (pyrethroid) chosen from the group cyano-(4-fluoro-3-phenoxyphenyl)-methyl-3-(2,2-dichloroethenyl)-2,2-dimethylcyclopropan-carboxylate(,±)α-cyano-3-phenoxy-benzyl-(±)-cis,trans-3-(2,2-dichlorovinyl)-2,2-dimethylcyclopropancarboxylate, (S)-α-cyano-3-phenoxybenzyl(1R,3R)-3(2,2-dibromovinyl)-2,2-dimethylcyclopropancarboxylate or 3-phenoxybenzyl-(±)-cis-trans-3-(2,2-dichlorovinyl)2,2-dimethylcyclopropancarboxylate or enantiomeric compounds thereof
and
the remainder at 100% by weight, but more than 40% by weight of a mixture of solvent and/or thinner and/or organic chemical binder and/or fixing agent, processing auxiliary agent, colouring agent, pigment, mixture of colouring agent or pigment.

2. Agent or concentrate according to Claim 1, characterized in that the solvent and/or thinner contains an organic chemical solvent or solvent mixture and/or an oily or oleaginous difficultly volatile organic chemical solvent or solvent mixture and/or a polar organic chemical solvent or solvent mixture and/or water and at least one emulsifier and/or wetting agent or consists thereof.

3. Agent or concentrate according to Claim 1 or 2, characterized in that as the 1-aryl-3-hydroxy-3-alkyl-4-(1,2,4-triazol-1-yl)-butane derivative of formula I 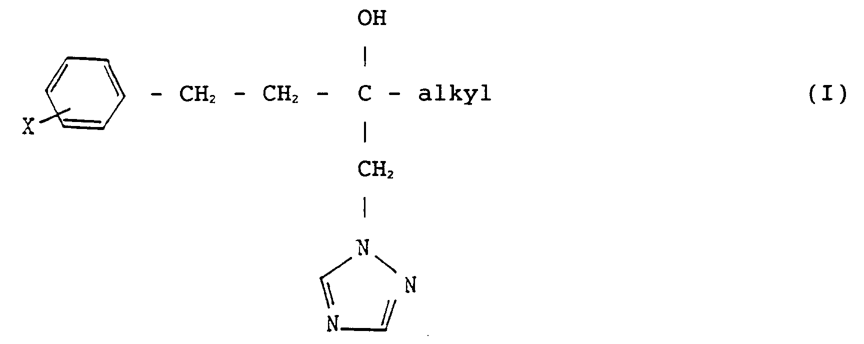 it contains
1-(4-fluoro-)phenyl-3-hydroxy-3-tert.-butyl-4-(1,2,4-triazol-1-yl)-butane,
1-(4-chloro-)phenyl-3-hydroxy-3-tert.-butyl-4-(1,2,4-triazol-1-yl)-butane or
1-(4-bromo-)phenyl-3-hydroxy-3-tert.-butyl-4-(1,2,4-triazol-1-yl)-butane.

4. Agent ready for use according to one of Claims 1 to 3, characterized in that it contains
0.2 to 3% by weight, preferably
0.5 to 2% by weight
of the 1-aryl-3-hydroxy-3-alkyl-4-(1,2,4-triazol-1-yl) butane derivative,
0.005 to 1% by weight, preferably
0.01 to 0.5% by weight
of the pyrethroid
and at least one organic chemical solvent or solvent mixture and/or one oily or oleaginous difficultly volatile organic chemical solvent or solvent mixture and/or one polar organic chemical solvent or solvent mixture and/or water and emulsifier and/or wetting agent and if necessary
0 to 5% by weight, preferably
0.1 to 3% by weight
fixing agent and/or other additive as residual constituent.

5. Agent ready for use according to one of Claims 1 to 3, characterized in that it contains
0.2 to 3% by weight, preferably
0.5 to 2% by weight
of the 1-aryl-3-hydroxy-3-alkyl-4-(1,2,4-triazol-1-yl)-butane derivative,
0.005 to 1% by weight, preferably
0.01 to 0.5% by weight
of the pyrethroid,
2 to 30% by weight, preferably
5 to 22% by weight calculated as the solid,
of a synthetic resin binder, preferably an alkide resin and/or a drying plant oil
as well as at least one organic chemical solvent or solvent mixture and/or an oily or oleaginous difficultly volatile organic chemical solvent or solvent mixture and/or a polar organic chemical solvent or solvent mixture and/or water and emulsifier and/or wetting agent
and if necessary siccatives, colouring agents, colouring pigments, anti-settling agents and/or UV-stabilizers as the residual constituent.

6. Concentrate according to one of Claims 1 to 3, characterized in that it contains
0.2 to 25% by weight, preferably
3 to 8% by weight,
of the fungicidal mixture
0.05 to 5% by weight, preferably
0.5 to 1% by weight
of the pyrethroid and
5 to 40% by weight, preferably
10 to 30% by weight,
(calculated as the solid) of at least one organic chemical binder and/or fixing agent or softener as well as
additionally an organic chemical solvent or solvent mixture and/or an oily or oleaginous difficultly volatile organic chemical solvent or solvent mixture and/or a polar organic chemical solvent or solvent mixture and/or a penetration auxiliary agent and/or water and an emulsifier and/or wetting agent as the residual constituent.

7. Agent or concentrate according to one of Claims 1 to 6, characterized in that it is free of aromatic oxyalcohols.

8. Agent or concentrate according to one of Claims 1 to 7, characterized in that a part of the organic chemical solvent or solvent mixture is replaced by an aliphatic polar organic chemical solvent or solvent mixture, preferably an aliphatic organic chemical solvent or solvent mixture containing hydroxy- and/or ester- and/or ether groups.

## Revendications

1. Produit ou concentré pour la conservation du bois ou des matériaux à base de bois, contenant :
de 0,05 à 25 % en poids d'un mélange fongicide choisi dans le groupe :
a) des dérivés de 1-aryl-3-hydroxy-3-alkyl-4-(1,2,4-triazole-1-yl)-butanes de formule I 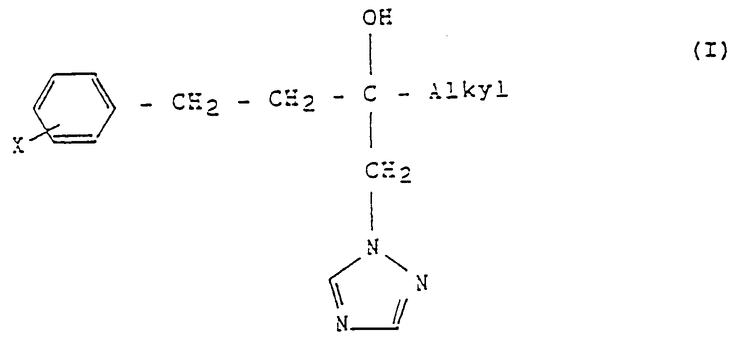 dans laquelle X est un halogène, un groupe alkylthio ayant de 1 à 4 atomes de carbone ou halogène alcoxy ayant 1 ou 2 atomes de carbone et 1 à 5 atomes d'halogène, et alkyl représente un groupe alkyle ayant de 1 à 4 atomes de carbone, et/ou leurs sels d'addition avec un acide et complexes d'un sel métallique,
et
b) d'au moins un fongicide choisi dans le groupe comprenant le N-dichlorofluorométhylthio-N',N'-diméthyl-N-phénylsulfodiamide, le N-(dichlorofluorométhylthio)-N',N'-diméthyl-N-p-tolylsulfamide, le 1-{[2-(2,4-dichlorophényl)-1,3-dioxclanne-2-yl]méthyl}-1-H-1,2,4-triazole, le 1-{[2-(2,4-dichlorophényl)-4-propyl-1,3-dioxolanne-2-yl]méthyl}-1-H-1,2,4-triazole, le naphténate de tributylétain et le carbamate de méthylbenzimidazole-2-yle,
où la quantité des fongicides du groupe b) par rapport au mélange de fongicides peut aller jusqu'à 50 % en poids et de préférence peut être compris entre 0,5 et 25 % en poids,
de 0,002 à 5 % en poids d'un insecticide (pyréthroïde) choisi dans le groupe comprenant le 3-(2,2-dichloroéthényl)-2,2-diméthylcyclopropanecarboxylate de cyano-(4-fluoro-3-phénoxyphényl)-méthyle, le (±)-cis,trans-3-(2,2-dichlorovinyl)-2,2-diméthylcyclopropanecarboxylate de (±)-α-cyano-3-phénoxybenzyle, le (1R,3R)-3-(2,2-dibromovinyl)-2,2-diméthylcyclopropanecarboxylate de (S)-α-cyano-3-phénoxybenzyle ou le (±)-cis-trans-3-(2,2-dichlorovinyl)-2,2-diméthylcyclopropanecarboxylate de 3-phénoxybenzyle ou encore leurs énantiomères,
et
le complément à 100 % en poids, mais qui représente plus de 40 % en poids, constitué d'un mélange de solvants et/ou de diluants et/ou de liants de la chimie organique, et/ou un fixateur, un auxiliaire de mise en oeuvre, un colorant, un pigment, un mélange de colorants ou un mélange de pigments.

2. Produit ou concentré selon la revendication 1, caractérisé en ce que le solvant et/ou diluant contient un solvant ou un mélange de solvants de la chimie organique et/ou un solvant ou un mélange de solvants huileux ou de tue huileux, difficilement volatils, de la chimie organique, et/ou un solvant ou un mélange de solvants polaires de la chimie organique et/ou de l'eau et au moins un émulsifiant et/ou un mouillant, ou en est constitué.

3. Produit ou concentré selon la revendication 1 ou 2, caractérisé en ce qu'il contient en tant que dérivé de 1-aryl-3-hydroxy-3-alkyl-4-(1,2,4-triazole-1-yl)-butane de formule I : 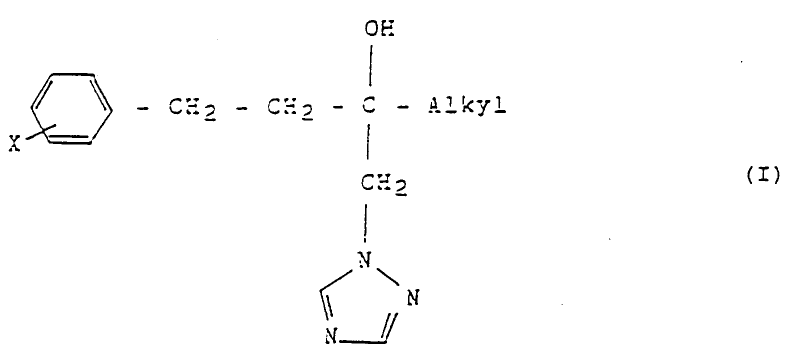 l'un des composés suivants : 1-(4-fluoro)phényl-3-hydroxy-3-tert-butyl-4-(1,2,4-triazole-1-yl)-butane,
1-(4-chloro)phényl-3-hydroxy-3-tert-butyl-4-(1,2,4-triazole-1-yl)-butane, ou
1-(4-bromo)phényl-3-hydroxy-3-tert-butyl-4-(1,2,4-triazole-1-yl)-butane,

4. Produit prêt à l'emploi selon l'une des revendications 1 à 3, caractérisé en ce qu'il contient de 0,2 à 3 % en poids et de préférence de 0,5 à 2 % en poids de dérivé de 1 aryl-3-hydroxy-3-alkyl-4-(1,2,4-triazole-1-yl)-butane, de 0,005 à 1 % en poids et de préférence de 0,01 à 0,5 % en poids de pyréthroïde, et au moins un solvant ou un mélange de solvants de la chimie organique et/ou un solvant ou un mélange de solvants huileux ou de tue huileux, difficilement volatils, de la chimique organique, et/ou un solvant ou un mélange de solvants polaires de la chimie organique et/ou de l'eau et un émulsifiant et/ou un mouillant, et éventuellement de 0 à 5 % en poids et de préférence de 0,1 à 3 % en poids de fixateurs et/ou d'autres additifs, représentant des constituants résiduels.

5. Produit prêt à l'emploi selon l'une des revendications 1 à 3, caractérisé en ce qu'il contient de 0,2 à 3 % en poids et de préférence de 0,5 à 2 % en poids de dérivé de 1-aryl-3-hydroxy-3-alkyl-4-(1,2,4-triazole-1-yl)-butane, de 0,005 à 1 % en poids et de préférence de 0,01 à 0,5 % en poids de pyréthroïde, de 2 à 30 % en poids et de préférence de 5 à 22 % en poids, calculés en extrait sec, d'un liant à base d'une résine synthétique, de préférence une résine alkyde et/ou une huile végétale siccative, ainsi qu'un solvant ou un mélange de solvants de la chimie organique et/ou un solvant ou un mélange de solvants huileux ou de tue huileux, difficilement volatils, de la chimique organique, et/ou un solvant ou un mélange de solvants polaires de la chimie organique et/ou de l'eau et un émulsifiant et/ou un mouillant, et éventuellement, en tant que constituants résiduels, des siccatifs, des colorants, des colorants pigmentaires, des agents antiredéposition et/ou des stabilisants UV.

6. Concentré selon l'une des revendications 1 à 3, caractérisé en ce qu'il contient de 0,2 à 25 % en poids et de préférence de 3 à 8 % en poids de mélange de fongicides, de 0,05 à 5 % en poids et de préférence de 0,5 à 1 % en poids de pyréthroïde, et de 5 à 40 % en poids, de préférence de 10 à 30 % en poids (calculé en extrait sec) d'au moins un liant et/ou fixateur ou plastifiant de la chimique organique, et en outre un solvant ou un mélange de solvants de la chimie organique et/ou un solvant ou un mélange de solvants huileux ou de tue huileux, difficilement volatils, de la chimie organique, et/ou un solvant ou un mélange de solvants polaires de la chimie organique et/ou un auxiliaire de pénétration et/ou de l'eau, et en tant que constituants résiduels, un émulsifiant et/ou un mouillant.

7. Produit ou concentré selon l'une des revendications 1 à 6, caractérisé en ce qu'il est exempt d'oxyalcools aromatiques.

8. Produit ou concentré selon l'une des revendications 1 à 7, caractérisé en ce qu'une partie du solvant ou du mélange de solvants de la chimie organique est remplacé par un solvant ou un mélange de solvants aliphatiques polaires de la chimie organique, de préférence par un solvant ou un mélange de solvants aliphatiques, de la chimie organique, contenant des groupes hydroxy et/ou ester et/ou éther.
